Europäisches Patentamt

European Patent Office

Office européen des brevets

(19)

(11) Publication number: **0 030 765**
**B1**

## (12) EUROPEAN PATENT SPECIFICATION

(45) Date of publication of patent specification: **03.07.85**

(21) Application number: **80201170.0**

(22) Date of filing: **08.12.80**

(51) Int. Cl.⁴: **G 02 B 5/08,** G 02 B 26/10,
C 03 C 17/40

(54) **Polygonal rotary scanners.**

(30) Priority: **13.12.79 GB 7942998**

(43) Date of publication of application:
**24.06.81 Bulletin 81/25**

(45) Publication of the grant of the patent:
**03.07.85 Bulletin 85/27**

(84) Designated Contracting States:
**DE FR GB NL SE**

(56) References cited:
**US-A-4 093 350**
**US-A-4 101 365**

(73) Proprietor: **PHILIPS ELECTRONIC AND
ASSOCIATED INDUSTRIES LIMITED
Arundel Great Court 8 Arundel Street
London WC2R 3DT (GB)**
(84) **GB**

(73) Proprietor: **N.V. Philips' Gloeilampenfabrieken
Groenewoudseweg 1
NL-5621 BA Eindhoven (NL)**
(84) **DE FR NL SE**

(72) Inventor: **Howden, Harry
PHILIPS RESEARCH LABORATORIES
Redhill Surrey RH1 5HA (GB)**

(74) Representative: **Boxall, Robin John et al
Philips Electronic and Associated Ind. Ltd.
Patent Department Mullard House Torrington
Place
London WC1E 7HD (GB)**

Courier Press, Leamington Spa, England.

## Description

This invention relates to a method of manufacturing polygonal-shaped, multi-faceted rotary scanners by replication.

In particular, this invention relates to a method of manufacturing polygonal-shaped, multi-faceted rotary scanners of the kind which comprises a plurality of optically flat surfaces on reflective layers which are integrally bonded to a multi-faceted polygonal base at precise angles to the axis of rotation of the multi-faceted polygonal base.

Multi-faceted polygonal scanners of this kind can be employed in a wide range of applications, typically for the accurate reflection of light, or other electromagnetic radiations, such as thermal radiation, from a radiation source for passage along a narrow path of a radiation sensor remote from the radiation source.

The angle at which each radiation-reflective facet of the multi-faceted polygonal scanner is set is subject to misalignment during manufacture and when the scanner is in use. The angle of each reflective facet is known to be critical because it determines the direction of the reflected radiation and the duration of the scan relative to the angular velocity of the rotating scanner. The relative angles at which the radiation reflective facets are set to each other also must be constant even when the scanner is subjected to large induced stresses due to high-speed rotation when the scanner is in use.

From US—A—4093350 it is known to produce high-speed, multi-faceted polygonal scanners by a replication technique.

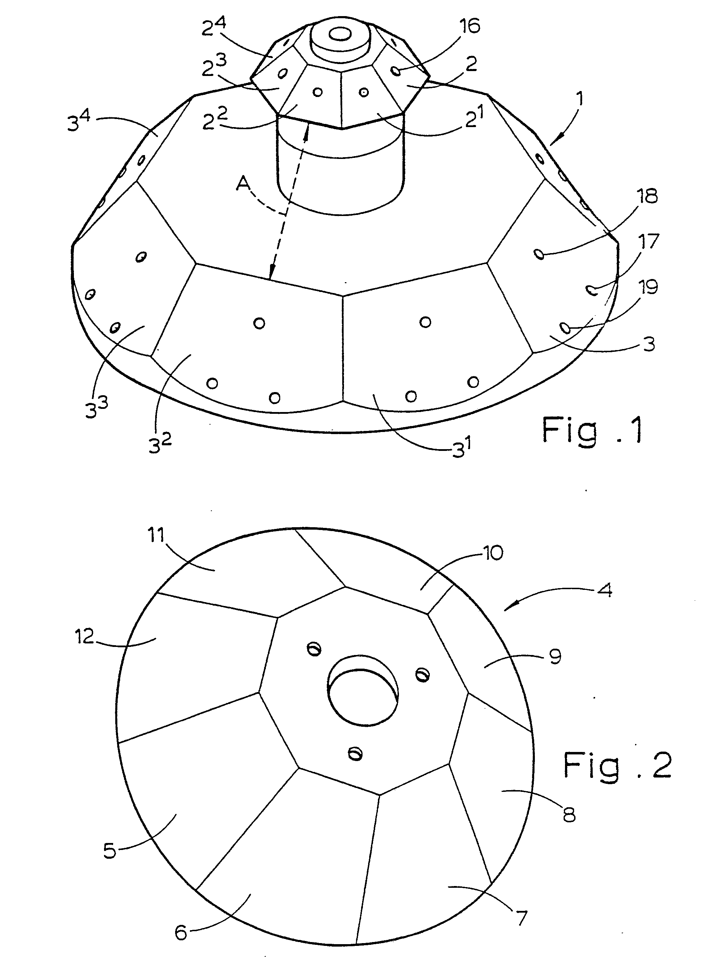

In the aforesaid U.S. Patent Specification there is described a process which comprises providing a multi-faceted polygonal master, the inner periphery of which comprises a plurality of facet-shaped members, providing an aluminium preform positioned concentrically within said master, and centrifugally casting an epoxy against said aluminium preform in a replica process to provide the multi-faceted polygonal scanner, said cast epoxy conforming to the shape of said faceted master. The epoxy is required to be cast by centrifugal dispersion into a single circumferential gap, in a one stage operation while the master is rotated on a vertical axis. The gap is positioned between the inner periphery of the master and the preform. Dispersion of the epoxy continues by the said centrifugal casting until the gap is filled with a thin film of bubble-free liquid epoxy. It is furthermore stated that in prior art replica techniques the production of large optical surfaces has been contemplated so that the application of a thin film plastic to be preform is found to be relatively easy. However, the ease of accessibility of these surfaces unfortunately does not always ensure a bubble-free plastic layer. Since the thickness of these layers may be only, e.g., approximately 127 μm, it can be seen that to fill the narrow cavity between the master and the polygonal preform without the introduction of air bubbles is extremely difficult, if not impossible. Thus such thin films of liquid resin are cast by centrifugal dispersion in the one-stage operation. The cast film of bubble-free epoxy is then cured. The master, however, then has to be removed without damaging either the preform or the master which is required for subsequent use. The preform is removed by a pushing action, or as illustrated by Figure 1 of the aforesaid U.S. Specification, by the use of screws which apply pressures at various disengagement points. It is clear that great care must be exercised if damage or distortion is to be avoided and this can be both time-consuming and expensive particularly when surplus resin becomes firmly set onto variously angled non-polished surfaces of the master.

The aforesaid process, furthermore, does not lend itself to a cheap simple manufacture of a multi-faceted preform with accurately produced surfaces for concentric positioning within said accurately produced master. Coating the surface of a plurality of facets with a single layer of gold may also be difficult to effect and expensive in material particularly if various surfaces are almost inaccessible. On removal of the master by breaking it away from the preform the gold layer so produced must separate from the surface of each facet of the master whilst remaining adhesively bonded to the hardened epoxy. Good separation obviously becomes increasingly difficult with an increase in the number of facets on the faceted master and with an increase in the changes of the angles of the facets. The invention aims to provide solutions to these problems of accessibility and removal.

Accordingly, it is an object of the present invention to provide a method of manufacturing a polygonal-shaped multi-faceted rotary scanner in which a separate, independently located master preform is used for producing each facet of the multi-faceted scanner so that greater accessibility is provided for the introduction of the liquid resin to ensure a bubble-free adhesive layer of resin in an easy and simple manner without having to rotate the assembly. The use of individual, independently located master preforms also makes it easier to remove the preforms without damaging the reflective layers.

According to the present invention there is provided a method of manufacturing a polygonal-shaped, multi-faceted rotary scanner by replication, which rotary scanner comprises a plurality of optically flat surfaces on relective layers which are integrally bonded to a multi-faceted polygonal base at precise angles to the axis of rotation of the multi-faceted polygonal base, wherein the optically flat reflective surfaces are each formed by coating an optically flat surface of a master preform with a reflective layer and locating the reflectively coated surface above and at the required angle to said base on a fixture on which said base has previously been concentrically mounted, adhesively bonding the reflective layer to the polygonal base with a resin in liquid form, hardening the resin and removing the master preform from the fixture to leave the reflective layer integrally bonded to the base, characterised in that for forming the plurality of optically flat surfaces of the scanner a corresponding plurality of separate flat master preforms is used, each preform being independently located with its reflectively coated surface at the required angle by locating means comprising upper and lower facet members of a multi-faceted polygonal master fixture having corresponding pluralities of said upper and lower facet members, each reflectively coated surface being positioned in a plane defined by a corresponding pair of said upper and lower facet members and above a corresponding facet of the polygonal base, which is concentrically mounted between said pluralities of upper and lower facet members, each facet of the base being stepped below the plane of the corresponding pair of upper and lower facet members to form between the facet and this plane a gap sufficient to accommodate any difference between the angle of the facet to the axis of the base and the required angle of the respective optically flat surface as determined by the corresponding pair of upper and lower facet members, and the bonding of each reflective layer to the corresponding facet of the polygonal base being effected by displacement of the liquid resin on contact of the resin with the reflective layer.

The master preforms are separately produced and may be identical or different. The master preforms are also preferably produced by replication techniques and in sufficiently large numbers that they can replace master preforms which have become damaged in use of additionally worked, for example, by re-coating previously used preforms with a further parting reflective layer while resin in contact with other preforms is hardening. The master preform furthermore may be easily coated with a parting layer for each subsequent use in the method. Each master preform may be simply manufactured to a first order of accuracy for the required profile and the surface finish by known techniques. Such techniques include mass production methods for casting, machining, grinding and/or polishing the surfaces of the master preform and also, if desired, hand-figuring and polishing techniques as used for producing surfaces for astronomical optical applications.

In one embodiment of the method according to the invention the flat master preforms each comprise a flat glass substrate having an optically polished surface which is coated with a parting layer, the surface of which adjacent the substrate comprises a radiation reflective layer. The parting layer may comprise a reflective layer of gold on the polished glass surface, a layer of platinum on the layer of gold and a layer of nickel on the layer of platinum. The multi-faceted polygonal base may be produced by casting and machining so that each facet is set substantially at the required angle and has a substantially flat surface, the angle and the surface finish being to a second order of profile accuracy and surface finish when compared with highly accurate profiles produced by known techniques for hand-figured optical profiles. Preferably, the base is machined from a blank of metal such as aluminium. The base may be in the form of a regular octahedron, although 6, 7 or 9 to 14 facet surfaces may be equally satisfactory.

Each of the gaps bounded by the reflectively coated surfaces of the master preforms on one side and the stepped facet surfaces of the multi-faceted polygonal base on the other side may have a depth of from 0.5 mm to 0.15 mm.

The gaps may be identical in depth, preferably 0.10 mm. The master preforms are coated with a parting layer at least on their optically polished surfaces. The parting layer preferably comprises a thin layer of gold on which, if desired, there is deposited a thin layer of platinum and further, if desired, a thin layer of nickel. The gold may be deposited by vapour deposition and the platinum and/or nickel deposited by electrodeposition. On separation from the master preform the gold layer in this embodiment then becomes the outermost layer and the reflective surface for the appropriate facet of the polygonal scanner. Other non-corrosive, specularly reflective metals, such as, tin, aluminium or copper are also suitable.

On assembly the gap between the surface of each facet of the base and the respective parting layer is filled by the resin in liquid form, said liquid resin being displaced on contact with the parting layer. The gap may be filled by a liquid thermosetting resin which is hardened by heat. Liquid self-polymerising resins are particularly satisfactory, that is, liquid resins which self-harden and in which hardeners, accelerators, catalysts and/or fillers if desired are incorporated. Solvent-based liquid resins are not particularly suitable because of a loss of volume or shrinkage on hardening.

Particularly suitable resins are epoxy resins based on the reaction product of bisphenol A and epichlorhydrin and to which a hardener, if desired, is added. Such resins, in general, have a suitable viscosity to flow on contact in the liquid state, can be made to flow free from entrapped bubbles by displacement on contact with the reflectively coated surface of the master preform and have a high structural strength when hardened. They also have a low coefficient of shrinkage on hardening and a low coefficient of thermal expansion over a useful working temperature range.

Other resins, such as, phenol formaldehyde, urea formaldehyde and liquid resol resins are also satisfactory. Cold-setting resins however, are particularly satisfactory as the liquid resin can be applied as a pool of liquid resin on each facet surface of the base and can be allowed to harden separately, if desired, as the master preforms are positioned against the upper and lower facet members of the master fixture.

A rapid curing liquid resin, such as, polycryanacrylate or a copolymer thereof can be used particularly to set each master preform separately. Each master preform can be quickly positioned and it will set separately, the master preform again being accurately positioned by contact with a part of its face against the corresponding pair of upper and lower facet members of the master fixture. Alternatively, each master preform may be held against the corresponding upper and lower facet members of the master fixture by one or more spring clips until the liquid resin is hardened. In one example of the method according to the invention in which spring clips held the master preforms until the resin was cured the liquid resin used was thermosetting resin comprising an epoxy bisphenol A to which a hardener was added. The liquid resin was applied to at least a part of each facet surface of the polygonal base and was displaced to cover these surfaces and fill the gaps between said surfaces and the reflectively coated surfaces of the master preforms. Excess liquid resin was removed prior to hardening of the resin. No trapped air bubbles were present in the hardened resin.

The invention will now be further described with reference to the accompanying drawings in which:

Figure 1 represents a perspective view of a multi-faceted polygonal master fixture with a number of precisely angled upper and lower facet members,

Figure 2 represents a perspective view of a multi-faceted polygonal base which can be removably assembled concentrically between the upper and lower facet members of the master fixture in the space indicated by the broken line A,

Figure 3 represents a perspective view of a master preform which is located in position by being removably attached to a corresponding pair of upper and lower facet members of the master fixture when the multi-faceted polygonal base member is in the position indicated by the broken line A,

Figure 4 represents a cross-section of one master preform in its assembled position with the polygonal base and an upper facet member and a lower facet member of the master fixture.

In Figure 1 the multi-faceted polygonal master fixture 1 is formed of cast aluminium and comprises a number of precisely machined pairs of angled upper and lower facet members, some of which are indicated by the numerals, 2; $2^1$, $3^1$; $2^2$, $3^2$; $2^3$, $3^3$ and $2^4$, $3^4$.

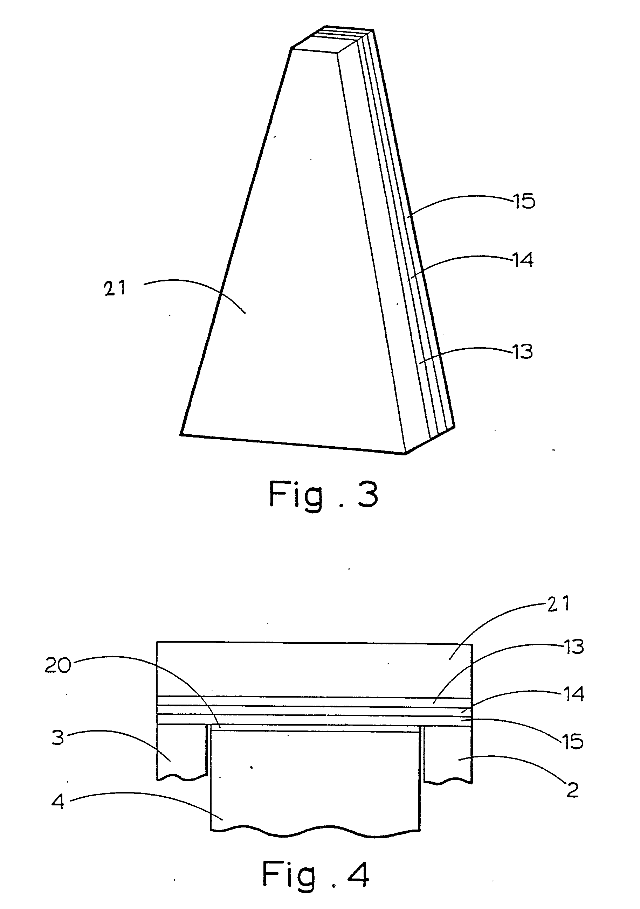

A multi-faceted polygonal base 4 (Figure 2) is removably positioned concentrically in the space indicated by the broken line A of Figure 1 when the upper facet members 2, $2^1$, $2^2$, $2^3$ and $2^4$ are removed. The polygonal base 4 is accurately positioned between the upper and lower facet members of the fixture 1 so that each of the facet surfaces 5, 6, 7, 8, 9, 10, 11 and 12 of the base is disposed in a plane which is stepped just below the plane defined by a corresponding pair of the upper and lower facet members. The base 4 is preferably formed by machining a blank of aluminium and the facet surfaces 5, 6, 7, 8, 9, 10, 11 and 12 are prepared to a second order of profile accuracy only. Figure 3 shows one of a number of master preforms each comprising a flat glass substrate with a surface which is accurately prepared to a first order of accuracy for both the resultant profile and the optically polished surface. The optically polished surface is coated with a thin parting layer comprising a vapour deposited film of gold 13, electrodeposited platinum 14 and electrodeposited nickel 15.

Figure 4 illustrates a longitudinal cross-section of one master preform 21 with a parting layer comprising gold 13, platinum 14 and nickel 15 coated on one surface. The parting layer is shown in contact with an upper facet member 2 and a lower facet member 3 of the fixture. A gap 20 is formed between the nickel layer 15 and the adjacent flat facet surface of the multi-faceted polygonal base 4.

The polygonal base 4 when positioned between the upper and lower facet members 2, 3; $2^1$, $3^1$; $2^2$, $3^2$; $2^3$, $3^3$ and $2^4$, $3^4$ was treated by placing three drops of a liquid epoxy resin on each facet surface of the base. The drops of resin formed a small, stable pool of liquid resin on each surface. If necessary the fixture 1 can be tilted to one side to keep the initial pool of liquid resin in the centre of each facet. Each preform 10 was then placed with the nickel 15 face downwards so that on contact therewith the respective pool of liquid resin was spread to fill completely the gap 20 between the nickel layer 15 and the respective facet surfaces 5, 6, 7, 8, 9, 10, 11 or 12 of the base 4. Excess liquid resin was removed in each case by wiping with a cloth. The preforms were each held in position until the resin hardened by spring clips (not shown) which were located at attachment holes 16 in the upper facet members and holes 17, 18, 19 in the lower facet members 2, 3.

A gap of 0.1 mm was left between the layer 15 on each master preform and the respective facet surface of base 4. When the resin was hardened the assembly was dismantled by removing each master preform 21 separately, followed by the upper part comprising the upper facet members 2, $3^1$, $2^2$, $2^3$, $2^4$ of the master fixture and the removing the finished multi-faceted polygonal scanner. The component parts were then reassembled to form the master fixture 1 again and the master preforms 21 were each recoated with a further parting layer 13, 14 and 15. Another multi-faceted polygonal base 4 prepared again to a second degree of accuracy for the facet surfaces was then positioned in the fixture 1 and a further scanner was replicated as above. No obvious defects were noticeable between the first scanner produced and the second and further scanners produced by the same method in a production run.

**Claims**

1. A method of manufacturing a polygonal-shaped, multi-faceted rotary scanner by replication, which rotary scanner comprises a plurality of optically flat surfaces on reflective layers which are integrally bonded to a multi-faceted polygonal base at precise angles to the axis of rotation of the multi-faceted polygonal base, wherein the optically flat reflective surfaces are each formed by coating an optically flat surface of a master preform with a reflective layer and locating the reflectively coated surface above and at the required angle to said base on a fixture on which said base has previously been concentrically mounted, adhesively bonding the reflective layer to the polygonal base with a resin in liquid form, hardening the resin and removing the master preform from the fixture to leave the reflective layer integrally bonded to the base, characterised in that for forming the plurality of optically flat surfaces of the scanner a corresponding plurality of separate flat master preforms is used, each preform being independently located with its reflectively coated surface at the required angle by locating means comprising upper and lower facet members of a multi-faceted polygonal master fixture having corresponding pluralities of said upper and lower facet members, each reflectively coated surface being positioned in a plane defined by a corresponding pair of said upper and lower facet members and above a corresponding facet of the polygonal base, which is concentrically mounted between said pluralities of upper and lower facet members, each facet of the base being stepped below the plane of the corresponding pair of upper and lower facet members to form between the facet and this plane a gap sufficient to accommodate any difference between the angle of the facet to the axis of the base and the required angle of the respective optically flat surface as determined by the corresponding pair of upper and lower facet members, and the bonding of each reflective layer to the corresponding facet of the polygonal base being effected by displacement of the liquid resin on contact of the resin with the reflective layer.

2. A method according to Claim 1, characterised in that the flat master preforms each comprise a flat glass substrate with an optically polished surface which is coated with a parting layer, the surface of which adjacent the substrate comprises a radiation reflective layer.

3. A method according to Claim 2, characterised in that the parting layer comprises a reflective layer of gold on the polished glass surface, a layer of platinum on the layer of gold and a layer of nickel on the layer of platinum.

4. A method according to any one of Claims 1 to 3 characterised in that the multi-faceted polygonal base is produced by casting and machining so that each facet is set substantially at the required angle and has a substantially flat surface, the angle produced and the surface finish produced being to an order of accuracy lower than that of the optically flat surfaces of the master preforms.

5. A method according to any of Claims 1 to 4, characterised in that each of the gaps bounded by the reflectively coated surfaces of the master preforms on one side and the stepped facet surfaces of the multi-faceted polygonal base on the other side has a depth of from 0.5 mm to 0.15 mm.

6. A method according to any one of the preceding claims, characterised in that the liquid resin in a thermosetting resin comprising an epoxy bisphenol A to which a hardener is added, the liquid resin being applied to at least a part of each facet surface of the polygonal base and being displaced to cover these surfaces and fill the gaps between said surfaces and the reflectively coated surfaces of the master preforms, excess liquid resin, if any, being removed prior to hardening of the resin.

7. A method according to any one of Claims 1 to 6, characterised in that the multi-facet polygonal base and the master multi-faceted polygonal fixture each have the form of a regular octahedron and in that eight flat master preforms are selected from a larger number of replica master preforms each coated with a reflective parting layer.

**Revendications**

1. Procédé de fabrication d'un miroir de balayage polygonal rotatif à plusieurs facettes par réplique, miroir de balayage rotatif comportant une pluralité de surfaces optiquement planes sur des couches réflectrices qui sont intimement liées à une base polygonale à plusieurs facettes sous des angles précis par rapport à l'axe de rotation de la base polygonale à plusieurs facettes, procédé suivant lequel on forme chacune des surfaces réflectrices optiquement planes en revêtant une surface optiquement plane d'une préforme maîtresse d'une couche réflectrice et en fixant la surface à revêtement réflecteur sur un support au-dessus de ladite base et sous l'angle requis par rapport à celle-ci, support sur lequel ladite base a été monté précédemment en position concentrique, en liant par adhésion la couche réflectrice à la base polygonale au moyen d'une résine en forme liquide, en durcissant la résine et en enlevant la préforme maîtresse du support de façon que la couche réflectrice reste intimement liée à la base, caractérisé en ce que, pour former la pluralité de surfaces optiquement planes du miroir de balayage, on utilise une pluralité correspondante de préformes maîtresses plates séparées, alors que chaque préforme sa surface à revêtement réflecteur étant disposée sous l'angle requis, est fixée individuellement, par des moyens de fixation comportant des éléments de facette supérieurs et inférieurs d'un support maître polygonal à plusieurs facettes présentant des pluralités correspondantes desdits éléments de facette supérieurs, et inférieurs que chaque surface à revêtement réflecteur est positionnée dans un plan défini par une paire correspondante desdits éléments de facette supérieurs et inférieurs et au-dessus d'une facette correspondante de la base polygonale qui es montée concentriquement entre lesdites pluralités d'éléments de facette supérieurs en inférieurs, que chaque facette de la base présente un gradin au-dessous du plan de la paire correspondante d'éléments de facette supérieurs et inférieurs de façon à former entre la facette et ce plan un espace suffisant pour compenser toute différence existant entre l'angle que fait la facette avec l'axe de la base et l'angle requis de la surface optiquement plane respective, tel que déterminé par la paire correspondante d'éléments de facette supérieurs et inférieurs, et que la liaison de chaque couche réflectrice à la facette correspondante de la base polygonale est effectuée par déplacement de la résine liquide dès que celle-ci est entrée en contact avec la couche réflectrice.

2. Procédé selon la revendication 1, caractérisé en ce que les préformes maîtresses plates comportent chacune un substrat plat en verre ayant une surface optiquement polie, revêtue d'une couche de séparation dont la surface contiguë au substrat comporte une couche réflectrice de rayonnements.

3. Procédé selon la revendication 2, caractérisé en ce que la couche de séparation comporte une couche réflectrice en or recouvrant la surface polie de verre, une couche en platine superposée à la couche en or et une couche en nickel superposée à la couche en platine.

4. Procédé selon l'une quelconque des revendications 1 à 3, caractérisé en ce que la base polygonale à plusieurs facettes est réalisée par coulée et par usinage de telle façon chaque facette soit réglée sensiblement sous l'angle requis et qu'elle présente une surface sensiblement plane, l'angle et le poli de surface produits ayant un degré de précision inférieur à celui des surfaces optiquement plates des préformes maîtresses.

5. Procédé selon l'une quelconque des revendications 1 à 4, caractérisé en ce que chacun des espaces limités, d'un côté, par les surfaces à revêtement réflecteur des préformes maîtresses et, de l'autre côté, par les surfaces de facette à grandin de la base polygonale à plusieurs facettes ont une profondeur comprise entre 0,5 mm et 0,15 mm.

6. Procédé selon l'une quelconque des revendications précédentes, caractérisé en ce que la résine liquide est une résine thermodurcissable comportant un bisphénol époxyde A additionné d'un durcissant, résine liquide qui est appliquée sur au moins une partie de chaque surface de facette de la base polygonale et qui est déplacée de façon à couvrir ces surfaces et à remplir les espaces compris entre lesdites surfaces et les surfaces à revêtement réflecteur des préformes maîtresses, l'excès éventuel de résine liquide étant éliminé avant le durcissement de la résine.

7. Procédé selon l'une quelconque des revendications 1 à 6, caractérisé en ce que la base polygonale à plusieurs facettes et le support polygonal maître à plusieurs facettes affectent chacun la forme d'un octaèdre régulier et en ce que huit préformes maîtresses plates sont choisies parmi un plus grand nombre de préformes maîtresses de réplique revêtues chacune d'une couche réflectrice de séparation.

**Patentansprüche**

1. Verfahren zum Herstellen eines polygonalen Rotationsabtastspiegels mit mehreren Facetten durch Replikation, der eine Vielzahl optisch flacher Oberflächen auf Reflexionsschichten aufweist, die auf einem polygonalen Träger mit mehreren Facetten integral aufgebracht sind und zwar mit genauen Winkeln zu der Drehungsachse des polygonalen Trägers mit mehreren Facetten, wobei die optisch flachen Oberflächen je dadurch gebildet werden, dass eine optisch flache Oberfläche einer Ausgangsvorform mit einer Reflexionsschicht bedeckt wird und die reflektierend bedeckte Oberfläche über und in dem gewünschten Winkel zu dem Träger auf einer Befestigungsvorrichtung befestigt wird, auf welcher der Träger vorher konzentrisch angeordnet wurde, wobei die Reflexionsschicht mit einem Harz in flüssiger Form an dem polygonalen Träger geheftet wird und das Harz ausgehärtet und die Ausgangsvorform der Befestigungsvorrichtung entnommen wird, wobei die Reflexionsschicht auf dem Träger integral haften bleibt, dadurch gekennzeichnet, dass zum Bilden der Vielzahl optisch flacher Oberflächen des Abtasters eine entsprechende Anzahl einzelner flacher Ausgangsvorformen verwendet werden, wobei jede Vorform mit ihrer reflektierend bedeckter Oberfläche in dem gewünschten Winkel durch Richtmittel mit oberen und unteren Facettenelementen einer polygonalen Befestigungsvorrichtung unabhängig angeordnet wird, wobei diese Befestigungsvorrichtung entsprechende Anzahlen der oberen und unteren Facettenelemente aufweist, wobei jede reflektierend bedeckte Oberfläche in einer Ebene, die durch ein entsprechendes Paar oberer und unterer Facettenelemente definiert wird, und über einer entsprechenden Facette des polygonalen Trägers positioniert wird, der zwischen den genannten Anzahlen oberer und unterer Facettenelemente konzentrisch angeordnet ist, wobei jede Facette des Trägers unterhalb der Ebene des entsprechenden Paares oberer und unterer Facettenelemente versetzt ist, um zwischen der Facette und dieser Ebene einen Spalt zu bilden der gross genug ist, um eine etwaige Differenz zwischen dem Winkel, den die Facette mit der Achse des Trägers einschliesst, und dem gewünschten Winkel der betreffenden optisch flachen Oberfläche, wie dies durch das betreffende Paar oberer und unterer Facettenelemente bestimmt wird, auszugleichen und wobei das Heften jeder Reflexionsschicht an die betreffende Facette des polygonalen Trägers durch Verdrängung des flüssigen Harzes bei Kontakt des Harzes mit der Reflexionsschicht erfolgt.

2. Verfahren nach Anspruch 1, dadurch gekennzeichnet, dass die flachen Ausgangsvorformen je einen flachen Glasträger aufweisen mit einer optisch polierten Oberfläche, die mit einer Trennschicht bedeckt wird, deren an den Träger grenzende Oberfläche eine strahlungsreflektierende Schicht aufweist.

3. Verfahren nach Anspruch 2, dadurch gekennzeichnet, dass die Trennschicht eine Reflexionsschicht aus Gold auf der polierten Glasoberfläche, eine Platinsicht auf der Goldschicht und eine Nickelschicht auf der Platinsicht aufweist.

4. Verfahren nach einem der Ansprüche 1 bis 3, dadurch gekennzeichnet, dass der polygonale Träger mit mehreren Facetten im Spritzgussverfahren hergestellt und derart bearbeitet wird, dass jede Facette nahezu in dem gewünschten Winkel steht und eine nahezu flache Oberfläche aufweist, wobei der Winkel und die Oberfläche mit einer Genauigkeit gewählt bzw. bearbeitet ist, die geringer ist als die der optisch flachen Oberflächen der Oberflächen der Ausgangsvorformen.

5. Verfahren nach einem der Ansprüche 1 bis 4, dadurch gekennzeichnet, dass jeder der Spalte, die durch die reflektierend bedeckten Oberflächen der Ausgangsvorformen einerseits und die versetzten Facettenoberflächen des polygonalen Trägers mit mehreren Facetten andererseits bestimmt werden, eine Tiefe von 0,5 mm bis 0,15 mm aufweist.

6. Verfahren nach einem der vorstehenden Ansprüche, dadurch gekennzeichnet, dass das flüssige Harz ein thermohärtendes Harz ist mit einem Epoxy-Bisphenol A, dem ein Härtungsmittel zugefügt wird, wobei das flüssige Harz wenigstens an einem Teil jeder Facettenoberfläche des polygonalen Trägers angebracht und darüber ausgebreitet wird um diese Oberflächen zu bedecken und die Spalte zwischen den genannten Oberflächen und den reflektierend bedeckten Oberflächen der Ausgangsvorformen zu füllen, wobei ein etwaiger Überschuss flüssigen Harzes vor dem Aushärten des Harzes entfernt wird.

7. Verfahren nach einem der Ansprüche 1 bis 6, dadurch gekennzeichnet, dass der polygonale Träger mit mehreren Facetten und die polygonale Befestigungsvorrichtung mit mehreren Facetten je die Form eines regelmässigen Oktaeders aufweist und dass acht flache Ausgangsvorformen aus einer grösseren Anzahl Replika-Ausgangsvorformen die, je mit einerm reflektierenden Trennschicht versehen sind, gewählt werden.

0 030 765

Fig .1

Fig .2

Fig . 3

Fig . 4